Europäisches Patentamt

European Patent Office

Office européen des brevets

(19)

(11) **EP 1 112 694 B1**

(12) **FASCICULE DE BREVET EUROPEEN**

(45) Date de publication et mention
de la délivrance du brevet:
**29.09.2004   Bulletin 2004/40**

(51) Int Cl.⁷: **A23L 2/04**, A23L 2/08,
A23L 2/14, A23B 7/02,
A23B 7/024

(21) Numéro de dépôt: **00460070.6**

(22) Date de dépôt: **07.12.2000**

(54) **Procédé de traitement pour obtenir un extrait de melon**

Verfahren zur Herstellung von Melonenextrakte

Treatment method to obtain a melon extract

(84) Etats contractants désignés:
**AT BE CH CY DE DK ES FI FR GB GR IE IT LI LU
MC NL PT SE TR**

(30) Priorité:  **08.12.1999  FR 9915447**

(43) Date de publication de la demande:
**04.07.2001   Bulletin 2001/27**

(73) Titulaire: **Le Rouge Gorge SA
79100 Taize (FR)**

(72) Inventeur: **Benani Zerrouki, Fatma
Z.A.C. du Périgné 49070 Beaucouze (FR)**

(74) Mandataire: **Maillet, Alain
Cabinet le Guen & Maillet,
5, Place Newquay,
B.P. 70250
35802 Dinard Cedex (FR)**

(56) Documents cités:
**EP-A- 0 901 757          DE-A- 1 807 564
FR-A- 2 669 809          US-A- 4 181 743
US-A- 4 643 902**

• **DATABASE WPI Section Ch, Week 199545
Derwent Publications Ltd., London, GB; Class
D13, AN 1995-345100 XP002144414 & CN 1 094
924 A (JIANG J), 16 novembre 1994 (1994-11-16)**
• **GALEB A.D.S.: 'Use of ion-exchange and direct
osmotic concentration technologies for
processing cantaloupe juice' DISSERTATION
ABSTRACTS INTERNATIONAL vol. 54, no. 9,
1993, page 189, XP008007769**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un procédé d'obtention d'un extrait de melon dans lequel on utilise notamment l'évapo-concentration. L'invention concerne également l'ensemble de moyens destinés à mettre en oeuvre ledit procédé. Cet extrait de melon ainsi obtenu peut être une pâte ou une crème.

Dans l'état actuel de la technique, le traitement des melons est particulièrement délicat et sensible pour obtenir, à partir du fruit, un extrait qui peut être utilisé dans diverses applications culinaires ou même tel quel.

On connaît le document intitulé "use of ion-exchange and direct osmotic concentration technologies for processing cantaloupe juice", écrit par GALEB A.. Ce document décrit un procédé d'obtention d'un extrait de melon, comprenant des étapes de pressage, centrifugation, filtration et osmose inverse.

On connaît la demande de brevet chinois publié sous le numéro CN-1094924 le 16 novembre 1994, qui décrit un procédé d'obtention d'un extrait de melon, comprenant des étapes de lavage, stérilisation, pressage, centrifugation et traitement sous vide.

On connaît déjà le document FR-A-2 669 809 publié le 04.12.90 et intitulé « Procédé pour la conservation par cryogénation de morceaux de melon frais et produit obtenu ». Dans ce document, il est rapporté que la conservation des fruits par cryogénation est bien connue mais qu'on ne sait pas conserver du melon, sinon sous forme confite, donc trop sucrée. En effet, compte tenu du volume, on ne peut surgeler valablement du melon. On a donc proposé de surgeler des morceaux de melon. Malheureusement, lors de la décongélation, ces morceaux s'affaissent, perdent ainsi de leur pouvoir attractif, et leurs qualités gustatives sont fortement altérées. Il est proposé, dans le document FR-A-2 669 809, de surgeler des morceaux de melon frais, de stocker ensuite les morceaux à basse température, puis d'enrober les morceaux congelés d'un sirop, puis de conditionner ces morceaux dans un récipient, puis de surgeler le récipient rempli et, enfin, de stocker en chambre froide les récipients.

On retiendra que, dans le document FR-A-2 669 809, on traite des morceaux de melon, par contre un objet de la présente invention consiste à prévoir un procédé de traitement dans lequel il n'est pas question de morceaux de melon mais uniquement de jus de melon.

Mais, dans ce cas, il faut savoir qu'un problème spécifique du melon est le contrôle de la vitesse de fermentation laquelle, quand elle est trop rapide, peut entraîner une floculation. De plus, lors de phases particulières, par exemple lorsque le jus obtenu est centrifugé, il faut éviter un excès de chaleur qui serait susceptible de dénaturer les pectines du melon qui sont particulièrement sensibles et essentielles, et ainsi d'altérer le goût du produit qui se caractérise par une fraîcheur typique.

On a proposé également, dans le document DE-A-18 07 564, un procédé de préparation de solution mais qui fait appel à un apport extérieur de sucre, ce qui, dans la présente invention, est totalement absent.

Dans le document EP-A-901 757, on propose l'élaboration d'un jus de melon destiné à être incorporé dans une boisson, dans lequel on prévoit d'extraire le jus de melon, d'ajuster le pH du liquide à une valeur maximale de 4, de traiter le liquide obtenu avec une enzyme du type pectinase, puis de filtrer la préparation pour la clarifier. Cet apport de pectinase modifie le métabolisme des pectines du melon. Comme on l'a déjà mentionné ci-dessus, suivant la présente invention, tout apport extérieur est exclu.

Dans le document US-A-4 643 902, il est encore proposé une méthode dans laquelle on procède, pour l'essentiel, à une ultrafiltration de jus de fruits suivie d'une inactivation de certains enzymes, par exemple par chauffage. Une telle inactivation n'est pas utilisée dans le procédé de traitement de la présente invention.

En résumé, la présente invention consiste à prévoir un procédé de traitement qui pallie les inconvénients mentionnés ci-dessus, en n'altérant pas les qualités du produit d'origine (goût, texture, développement microbien).

Suivant une caractéristique de l'invention, le procédé de traitement pour obtenir un extrait de melon comprend les étapes suivantes :

a) on cueille des melons frais que l'on lave et désinfecte,
b) on presse ces melons
c) on concentre le jus du melon par évaporation d'eau par évapo-concentration dans un évapo-concentrateur,

caractérisé en ce que les conditions de fonctionnement de l'évapo-concentrateur sont les suivantes:

pression de 50 millibars;
température de fluide caloporteur limitées à 55°C;
température du concentré ne dépassant pas 45°C.

Avantageusement la température du concentré est de 36,9°C.

Avantageusement entre les étapes a) et b), le procédé comprend encore les étapes suivantes:

d) on congèle les melons entiers, puis, plus tard,

e) on les décongèle.

En agissant ainsi, on obtient un produit à très forte teneur en matière sèche afin de pouvoir l'utiliser comme une pâte ou une base en viennoiserie, crémerie, glacerie, etc.

Un autre objet de l'invention est d'améliorer les phases de déshydratation et de mise en présence d'un sirop de glucose, ce qui permet de rentabiliser les melons non calibrés et donc de rendre plus performante une exploitation maraîchère.

Un autre objet de l'invention est d'obtenir un produit final type "miel de melon" ou encore une crème de melon, et de permettre son insertion dans divers produits agro-alimentaires ou encore à usage direct vers le consommateur.

Les caractéristiques mentionnées ci-dessus de la présente invention, ainsi que d'autres, apparaîtront plus clairement à la lecture suivante de la description d'un exemple de réalisation d'un ensemble de moyens de mise en oeuvre du procédé de traitement afin d'obtenir un concentré de melon suivant l'invention, ladite description étant faite en relation avec les dessins joints, ne font pas partie de l'invention parmi lesquels :

la Fig. 1 est un bloc-diagramme d'un atelier de transformation, et

la Fig. 2 est un bloc-diagramme partiel d'une variante de l'atelier de la Fig. 1.

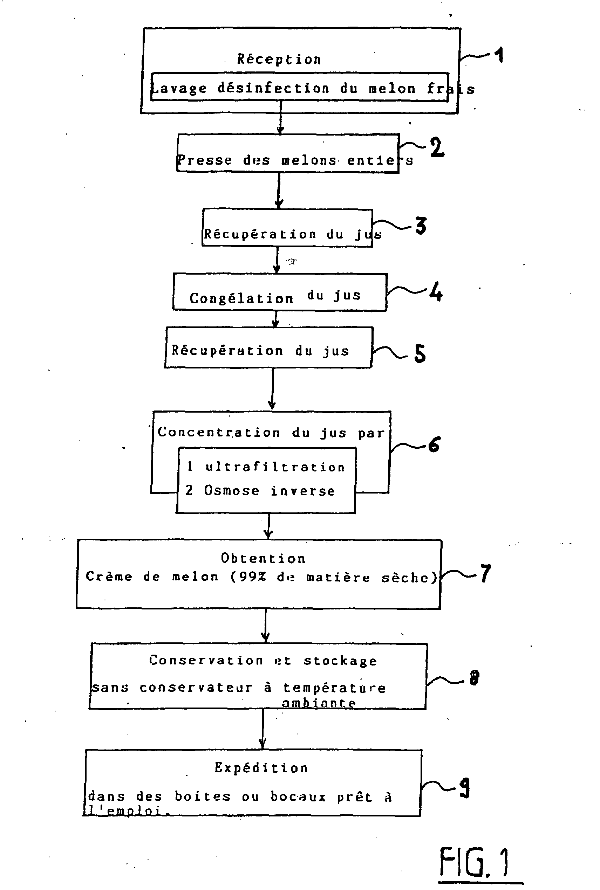

Dans le bloc-diagramme de la Fig. 1, la première opération consiste, dans la salle de réception 1, à procéder à un lavage et une désinfection du melon frais de l'ordre du ppm (70-130). On utilise du melon frais à, par exemple, 18°C.

Dans un premier traitement indiqué en 2, le melon est pressé entier avec sa peau ou bien pelé et égrainé.

Après la presse en 2, on centrifuge en 3 le jus obtenu à des vitesses allant de 10 000 à 13 000 t/m, (tours/min) pendant 15 à 20 minutes, en contrôlant la température qui ne doit pas dépasser 15°C.

Cette opération est importante du point de vue biochimique, car un excès de chaleur peut dénaturer les pectines du melon et, donc, altérer le goût de fraîcheur typique au melon. De même, le problème propre au melon est la vitesse de fermentation qui peut fausser le procédé de précipitation.

Une fois le jus de melon obtenu, une phase de précipitation est faite grâce à la centrifugation. On récupère le surnageant et on le filtre à l'aide d'un filtre à faibles porosités, afin de laisser passer les pectines et la matière organique.

Le soluté ou jus de melon, ainsi récupéré, est versé dans des bacs qui sont stockés dans des chambres froides à environ - 60°C. Cette congélation en 4 à très basses températures permet de maîtriser l'opération d'évacuation d'eau qui va suivre et aussi d'empêcher les pectines de mousser. Puis on récupère le jus congelé en 5.

On concentre, en 6, le jus de melon par évaporation d'eau. Cette opération se réalise grâce au vide à une pression allant de 1 et 2 millibars dans un environnement à 20°C. On place le jus de melon congelé sur un plateau réchauffé à 20°C. Le plateau subit une sublimation qui va provoquer une perte d'eau où les molécules sont captées par un serpentin dont la température est à - 70°C. La durée de cette opération est fonction de la qualité de la teneur en sucre du melon utilisé. L'opération est voisine d'une lyophilisation partielle ou complète.

Des opérations d'ultrafiltration ou même d'osmose inverse peuvent être utilisées en amont de la lyophilisation partielle.

Selon le degré de lyophilisation, en 6, on obtient deux types d'extraits :

Soit l'extrait de melon en forme de pâte : ce dernier a une concentration de matières sèches variant de 95 % à 99 %.

Soit l'extrait de melon en forme de poudre, quand il y a lyophilisation à 100 %.

La différence entre les deux extraits réside uniquement dans la concentration de la matière sèche.

Dans les deux cas, on atteint la stabilité microbiologique.

Pour son utilisation finale, cet extrait de melon est dilué dans un sirop de glucose. En fonction de l'utilisation de ce produit, les dilutions seront fixées par l'utilisateur lui-même, ce qui rend le produit plus original.

Il est important de tenir compte de données numériques pour évaluer le résultat de la concentration d'extrait de melon, cette évaluation étant calculée par rapport au taux de matière sèche obtenu. Ce taux dépend de l'état initial des melons qui doivent avoir un indice réfractométrique de 12.5 au minimum.

L'extrait final doit avoir un taux de matière sèche variant de 95 % à 99 %.

Le calcul de la matière sèche est le suivant :

$$\% \text{ M.S.} = \frac{(M.I.jus) - (M.f.lyo)}{M.I.jus} \times 100$$

% M.S. = pourcentage de matière sèche

M.I. jus = masse initiale de jus

M.f= masse finale après lyophilisation

Ensuite, en 8, on conserve et on stocke l'extrait ainsi obtenu à température ambiante, sans utiliser de conservateur. Enfin, en 9, on expédie l'extrait en boîtes ou en bocaux prêts à l'emploi.

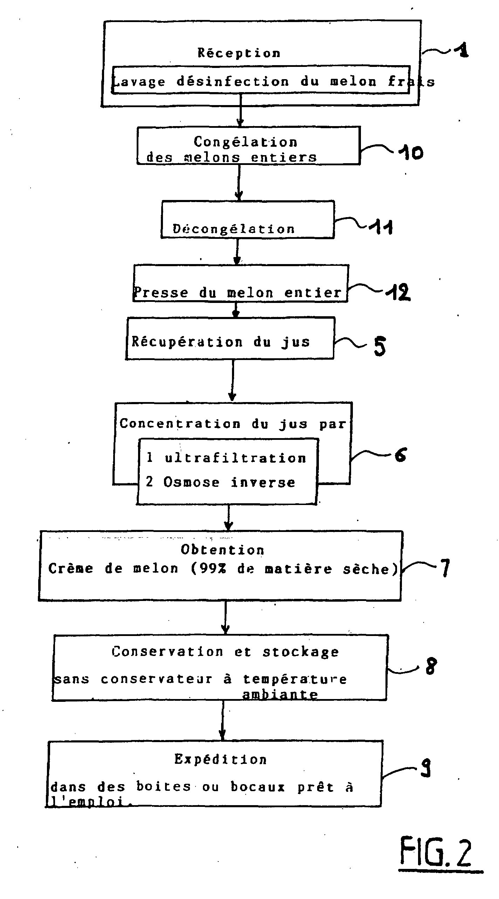

Dans le bloc-diagramme de la Fig. 2, on a prévu, en aval de la salle 1, une congélation des melons entiers en 10, suivie d'une décongélation en 11 et d'une presse du melon entier en 12, avant de passer à la récupération du jus en 5 qui précède la concentration en 6.

Afin d'évaluer le procédé, on a procédé à plusieurs expérimentations. Par exemple, on a utilisé deux lots de melons charentais.

lot n° 1 - 15 melons congelés au fur et à mesure de la campagne

lot n° 2 - 20 melons frais

Pour le transport, on a utilisé une logistique classique. En effet, il n'est pas nécessaire d'utiliser des camions frigorifiques.

On peut remarquer que la totalité des melons est fendue, en effet il s'agit de melons qui n'ont pas été estimés vendables pour cette raison sur les marchés.

On a attribué aux différents échantillons les codes suivants:

Lot n° 1 :

| Echantillon A | Melon frais |
|---|---|
| Echantillon B | Melon frais |
| Echantillon C | Melon frais |
| Echantillon D | Melon frais mais moins bien conservé |
| Echantillon E | Melon frais mais moins bien conservé |

Lot n° 2 :

| Lot n° 1 : | |
|---|---|
| Echantillon A | Melon frais |
| Echantillon B | Melon frais |
| Echantillon C | Melon frais |
| Echantillon D | Melon frais mais moins bien conservé |
| Echantillon E | Melon frais mais moins bien conservé |
| Lot n° 2 : | |
| Échantillon F | Melon congelé |
| Échantillon G | Melon congelé |

Les melons des échantillons A. B. C. D et E sont pelés au couteau. égrainés, puis broyés dans une centrifugeuse ménagère de type VORWERK thermomix. On introduit le produit ainsi obtenu dans des pots de centrifugation et on le centrifuge à 13 000 t/m pendant 20 minutes dans une centrifugeuse de type "Sorvall RC-5B Refrigerated Super Speed Centrifuge" à une température de 20°C.

On récupère le surnageant que l'on filtre à travers un coton de verre dans une grande éprouvette dans laquelle on effectue une mesure de l'indice réfractométrique (IR) afin d'estimer le pourcentage de matière sèche de départ.

Après récupération du surnageant, celui-ci est réparti dans des Becher en Inox, avant de l'introduire dans un appareil de lyophilisation. Les différents récipients, contenant les échantillons A, B, C, D et E, sont pesés au cours de la lyophilisation afin de déterminer la quantité de matière sèche résiduelle. Cette opération se poursuit jusqu'à l'apparition de la texture désirée pour les différents échantillons.

La quantité de matière sèche est calculée de la manière suivante:

$$M_I * IR = M_F * X \text{ soit } X = (M_I * IR)/M_F$$

où $M_I$ représente la masse du produit initial ; IR représente l'indice réfractométrique du melon au départ ; et $M_F$ représente la masse du produit au moment de la pesée, c'est-à-dire la masse du produit final ; X représente la quantité de matière sèche en %.

On effectue un premier essai en utilisant « une parmentière » afin de peler les melons encore cristallisés. Cet appareil est utilisé pour éplucher par abrasion les légumes les plus fermes. On introduit 3 melons préalablement pesés, puis on programme la machine à 7 min. Le test sera renouvelé afin de déterminer un temps optimal de pelage.

On effectue un deuxième essai sur les melons de l'échantillon F, décongelés à température ambiante. Les melons décongelés sont pelés, puis introduits dans une presse de laboratoire.

On effectue un troisième essai sur les melons de l'échantillon G, décongelés à température ambiante. Ces melons sont directement introduits dans la presse, de type PENELOPE, du laboratoire.

Le filtrat récupéré est centrifugé, filtré, puis lyophilisé par la même méthode que pour les melons frais.

Résultats des essais :

Les prises de poids pendant la lyophilisation et les calculs des taux de matière sèche figurent dans le tableau suivant qui concerne l'évolution en grammes des poids du melon au cours de la lyophilisation.

| Poids/ Echantillons | A | B | C | D | E | F | G |
|---|---|---|---|---|---|---|---|
| IR | 12,30 | 12,30 | 12,30 | 12,30 | 12,30 | 12,30 | 12,30 |
| Broyés ou pressés | 2254,50 | 2256,52 | 2354,10 | 2391,60 | 2439,00 | 2410,90 | 2240,20 |
| Récipient | 1715,7 | 1717,6 | 1710,9 | 1768,4 | 1746,9 | 1790,0 | 1793,0 |
| Avec récipient | 3483,73 | 3480,12 | 3500,0 | 4160,0 | 4185,9 | 4180,0 | 4193,0 |
| 1e pesée | 3265,15 | 3252,68 | 3303,35 | 3809,51 | 3809,64 | 3736,26 | 3804,0 |
| Concentré | 1549,45 | 1535,08 | 1592,45 | 2040,60 | 2062,74 | 1946,26 | 2011,00 |
| 2e pesée | 2312,10 | 2457,50 | 2388,86 | 3102,52 | 3063,16 | 2901,06 | 3105,15 |
| Concentré | 596,40 | 739,40 | 677,90 | 1334,12 | 1316,26 | 1111,06 | 1312,15 |
| 3e pesée | 2098,63 | 2119,40 | 2166,20 | 2738,83 | 2787,13 | 2334,60 | 2710,20 |
| Concentré | 382,93 | 401,80 | 455,30 | 970,43 | 1040,23 | 544,60 | 917,20 |
| 4e pesée | 1993,56 | 2071,48 | 2012,21 | 2376,08 | 2476,08 | 2181,32 | 2672,23 |
| Concentré | 277,86 | 353,88 | 301,31 | 607,68 | 729,18 | 391,32 | 879,23 |
| % matière sèche | 99,79 | 78,43 | 73,03 | 48,40 | 41,14 | 75,75 | 31,33 |

Les essais tels que décrits ci-dessus montrent l'intérêt de ce procédé.

L'invention consiste à améliorer les procédés ci-dessus, en fonction d'étude de rendement et de faisabilité technique. On a amélioré le procédé en obtenant le concentré de melon décrit dans l'étape f) ci-dessus par évapo-concentration. En fait, après le pressage du melon et obtention d'un jus visqueux, on procède à une mise en bocal et à un traitement dans un évapo-concentreur afin d'obtenir le jus le plus concentré possible compte tenu des limitations de l'évapo-concentreur liées à la viscosité du produit.

Les conditions de fonctionnement de l'évapo-concentreur (en mode concenteur « flot tombant ») ont été les suivantes : une pression de 50 millibars, une température du fluide caloporteur limitée à 55 °C, pour empêcher le chauffage, et une température du concentré de 36,9°C.

Le procédé permettant d'obtenir l'extrait de melon peut faire l'objet d'autres phases de traitement pour des applications spécifiques sans modifier la portée de l'invention

**Revendications**

1. Procédé de traitement pour obtenir un extrait de melon, du type comprenant
    une étape a) où l'on cueille des melons frais que l'on lave et désinfecte,
        une étape b) où on presse ces melons entiers et
        une étape c) où on concentre le jus du melon par évaporation d'eau par évapo-concentration dans un évapo-concentrateur,
    **caractérisé en ce que** les conditions de fonctionnement de l'évapo-concentrateur sont les suivantes:

    pression de 50 millibars;
    température de fluide caloporteur limitées à 55°C;

température du concentré ne dépassant pas 45°C.

2. Procédé de traitement pour obtenir un extrait de melon selon la revendication 1, **caractérisé en ce que** la température du concentré est de 36,9°C.

3. Procédé de traitement pour obtenir un extrait de melon selon l'une des revendications précédentes, **caractérisé en ce qu'**entre les étapes a) et b), il comprend encore les étapes suivantes:

 d) on congèle les melons entiers, puis, plus tard,
 e) on les décongèle.

**Patentansprüche**

1. Behandlungsverfahren, um einen Melonenextrakt zu erhalten, umfassend:

 a) einen Schritt des Pflückens der frischen Melonen, die gewaschen und desinfiziert werden,

 b) einen Schritt des Pressens dieser (ganzen) Melonen, und

 c) einen Schritt der Konzentration des Melonensaftes durch Verdampfen des Wassers durch Verdampfungskonzentration in einem Verdampfungskonzentrator,

 **dadurch gekennzeichnet, dass** die Funktionsbedingungen des Verdampfungskonzentrators folgende sind:

 Druck von 50 Millibar
 Temperatur des flüssigen Kühlmittels auf 55 °C begrenzt
 Temperatur des Konzentrats nicht über 45 °C.

2. Behandlungsverfahren, um einen Melonenextrakt zu erhalten, nach Anspruch 1, **dadurch gekennzeichnet, dass** die Temperatur des Konzentrats 36,9 °C beträgt.

3. Behandlungsverfahren, um einen Melonenextrakt zu erhalten, nach einem der vorhergehenden Ansprüche, **dadurch gekennzeichnet, dass** es zwischen den Schritten

 a) und b) noch die folgenden Schritte umfasst:

 d) Einfrieren der ganzen Melonen, dann später

 e) Auftauen.

**Claims**

1. Treatment method to obtain a melon extract of the type comprising
a step a) where fresh melons are picked and then washed and disinfected,
a step b) where these whole melons are squeezed and
a step c) where the melon juice is concentrated by evaporation of the water by means of evapo-concentration in an evapo-concentrator, **characterised in that** the operating conditions for the evapo-concentrator are as follows:

 pressure of 50 millibars;
 heat transfer fluid temperature limited to 55°C;
 concentrate temperature not exceeding 45°C.

2. Treatment method to obtain a melon extract according to Claim 1, **characterised in that** the concentrate temperature is 36.9°C.

3. Treatment method to obtain a melon extract according to one of the preceding claims, **characterised in that**, between steps a) and b), it also comprises the following steps:

d) the whole melons are frozen and then, later,
e) they are defrosted.

EP 1 112 694 B1

Réception
Lavage désinfection du melon frais — 1

Presse des melons entiers — 2

Récupération du jus — 3

Congélation du jus — 4

Récupération du jus — 5

Concentration du jus par — 6
1 ultrafiltration
2 Osmose inverse

Obtention
Crème de melon (99% de matière sèche) — 7

Conservation et stockage
sans conservateur à température
ambiante — 8

Expédition
dans des boites ou bocaux prêt à
l'emploi. — 9

FIG. 1

8

**FIG.2**